# EUROPÄISCHE PATENTANMELDUNG

(11) **EP 1 653 033 A2**
(43) Veröffentlichungstag der Anmeldung: **03.05.2006**
(21) Anmeldenummer: 05022315.5
(22) Anmeldetag: 13.10.2005
(51) Int. Cl.: E05F 15/12, B62D 25/12, F16H 1/28

(54) **Antrieb zum Verschwenken einer an einer Karosserie eines Fahrzeugs angeordneten Klappe**

(30) Priorität: 28.10.2004 DE 102004052504; 17.09.2005 DE 102005044579
(71) Anmelder: Stabilus GmbH, 56070 Koblenz (DE)
(72) Erfinder: Kleinmann, Michael, 56581 Melsbach (DE); Ritter, Andreas, 56206 Hilgert (DE)
(74) Vertreter: Klein, Thomas

(57) **Zusammenfassung**

Die Erfindung bezieht sich auf einen Antrieb zum Verschwenken einer an einer Karosserie eines Fahrzeugs angeordneten Klappe um eine Schwenkachse, mit einem Antriebsmotor, durch den über einen ein Planetengetriebe 4 aufweisenden Antriebsstrang die Klappe schwenkbar antreibender Abtrieb drehbar antreibbar ist. Dabei weist das Planetengetriebe 4 ein Sonnenrad 3, einen Innenzahnkranz 5, ein mit dem Sonnenrad 3 und dem Innenzahnkranz 5 in Eingriff stehendes Planetenrad 6 und einen das Planetenrad 6 tragenden Planetenträger 8 auf, der drehfest mit einer zur Drehachse des Planetenträgers 8 koaxialen Welle 9 verbunden ist. Durch eine Bremseinrichtung 11 ist die Drehbewegung einer Komponente des Planetengetriebes 4 bremsbar. Durch die Bremseinrichtung 11 ist die Drehbewegung des Innenzahnkranzes 5 bremsbar, von dem Antriebsmotor das Sonnenrad 3 drehbar antreibbar und die Welle 9 des Planetenträgers 8 bildet den Abtrieb.

## Beschreibung

Die Erfindung bezieht sich auf einen Antrieb zum Verschwenken einer an einer Karosserie eines Fahrzeugs angeordneten Klappe um eine Schwenkachse, mit einem Antriebsmotor, durch den über einen ein Planetengetriebe aufweisenden Antriebsstrang die Klappe schwenkbar antreibender Abtrieb drehbar antreibbar ist, wobei das Planetengetriebe ein Sonnenrad, einen Innenzahnkranz, ein oder mehrere mit dem Sonnenrad und dem Innenzahnkranz in Eingriff stehende Planetenräder und einen die Planetenräder tragenden Planetenträger aufweist, der drehfest mit einer zur Drehachse des Planetenträgers koaxialen Welle verbunden ist, mit einer Bremseinrichtung, durch die die Drehbewegung einer Komponente des Planetengetriebes bremsbar ist.

Durch die Verwendung eines Planetengetriebes zeichnen sich derartige Antriebe durch eine geringe Baugröße aus. Gleichzeitig ist bei gelöster Bremseinrichtung die Klappe von Hand schwenkbar, auch dann, wenn das Planetengetriebe von einem selbsthemmenden Antriebsmotor wie z.B. einem Motor mit Schneckenradstufe angetrieben wird.

Aufgabe der Erfindung ist es einen Antrieb der eingangs genannten Art zu schaffen, der ein großes Übersetzungsverhältnis ermöglicht und gleichzeitig bezogen auf das Bewegen der Klappe von Hand zwischen einem blockierenden und einem bewegbaren Zustand geschaltet werden kann.

Diese Aufgabe wird erfindungsgemäß dadurch gelöst, daß durch die Bremseinrichtung eine Komponente des Planetengetriebes, insbesondere der Innenzahnkranz festsetzbar ist und daß von dem Antriebsmotor das Sonnenrad oder der Planetenträger oder der Innenzahnkranz drehbar antreibbar ist und daß die Welle des Planetenträgers oder das Sonnenrad oder der Innenzahnkranz den Abtrieb bildet.

Durch diese Ausbildung wird ein Moment mit der gewünschten Übersetzung nur dann an den Abtrieb übertragen, wenn eine Komponente des Planetengetriebes.festgehalten wird.

Dies wird durch die Bremseinrichtung realisiert.

Ist die Komponente des Planetengetriebes nicht blockiert, kann die Klappe aufgrund des sehr geringen Widerstandes des Planetengetriebes zumindest weitgehend frei manuell bewegt werden, sodaß auch bei stehendem Antriebsmotor eine Klappenbewegung möglich ist.

Das erreichbare große Übersetzungsverhältnis ist besonders vorteilhaft, wenn sich die Schwenkachse horizontal erstreckt.

Als Abtrieb kann auf der Welle ein Abtriebszahnrad angeordnet sein, von dem die Klappe schwenkbar antreibbar ist.

Die Klappe kann über eine Getriebestufe von der Welle schwenkbar antreibbar sein, die bauraumsparend z.B. als ein ein- oder mehrstufiges Stimradgetriebe ausgeführt sein kann.

Vorzugsweise ist der Antriebsmotor ein Elektromotor, insbesondere ein Gleichstrommotor, der zur Optimierung auch als Elektrogetriebemotor ausgebildet sein kann.

Ist durch den nicht angetriebenen Antriebsmotor eine Zwischenposition der Klappe selbsthemmend haltbar, so kann eine Haltefunktion in einer Zwischenstellung der Klappe bei Deaktivierung des Antriebsmotors durch die geschlossene Bremseinrichtung realisiert werden.

Zum Bremsen der Komponente des Planetengetriebes ist vorzugsweise die Bremseinrichtung in Eingriff mit einer Bremsscheibe bringbar, wobei die Bremsscheibe fest mit dem Innenzahnkranz oder der Welle oder mit dem Sonnenrad verbunden oder an einem von dem Innenzahnkranz oder der Welle oder mit dem Sonnenrad drehbar antreibbaren Bauteil angeordnet ist.

Ist die Bremseinrichtung an einem von dem Innenzahnkranz drehbar antreibbaren Bauteil angeordnet, kann damit ein Bremsen mit Übersetzung erfolgen.

Ist die Bremseinrichtung eine reibschlüssige Bremseinrichtung, die eine Bandbremse oder eine Scheibenbremse oder eine Trommelbremse sein kann, oder ist die Bremseinrichtung eine kraftschlüssige Bremseinrichtung, so kann bei hoher Bremskraft der Bremseinrichtung eine Blockade des Innenzahnkranzes, des Sonnenrades oder Planetenträgers zum motorischen Klappenantrieb oder bei niedriger Bremskraft und ausgeschaltetem motorischen Klappenantrieb eine manuelle Klappenverschwenkung unter Überwindung der Bremskraft erreicht werden, wobei die Bremskraft so bemessen ist, um die Klappe in einer Zwischenstellung zu halten, sofern der Antriebsmotor eine ausreichende Selbsthemmung hat.

Ist die Bremseinrichtung eine feststehende elektromagnetische Bremse, die mit ihrem Magnetfeld auf die aus einem ferromagnetischen Material bestehende Bremsscheibe wirkt, so ist deren Aufbau einfach und kostengünstig.

Die Bremseinrichtung, insbesondere die elektromagnetische Bremse kann in Abhängigkeit von einem Ausgangssignal eines eine Bewegung der Klappe erfassenden Bewegungssensors ansteuerbar sein, so daß energiesparend nur ein kurzer Stromverbrauch zur Ansteuerung der elektromagnetischen Bremse erforderlich ist.

Zur Optimierung der erzielbaren Bremskraft kann das Magnetfeld der elektromagnetischen Bremse axial zur Drehachse der Bremsscheibe gerichtet sein.

Besteht die Bremsscheibe aus einem dauermagnetischen Werkstoff, in dessen Magnetfeld ein axial zur Drehachse gegenüberliegendes, feststehendes ferromagnetisches Bauteil angeordnet ist, so ist auch bei nicht angesteuerter Bremse diese Bremse mit geringer Bremskraft geschlossen. Die Bremskraft ist ausreichend um die Klappe in einer Zwischenstellung zu halten. Durch manuelle Beaufschlagung der Klappe ist diese aber unter Überwindung der Bremskraft verstellbar.

Je nach Bestromung kann die Spule der elektromagnetischen Bremse ein die Bremsscheibe anziehendes und/oder abstoßendes Magnetfeld erzeugbar bestrombar sein.

Dies führt dazu, daß bei die Bremsscheibe anziehendem Magnetfeld die Bremse mit starker Kupplung zum motorischen Antrieb der Klappe geschlossen ist.

Bei die Bremsscheibe abstoßendem Magnetfeld ist die Bremse offen und die Klappe kann frei manuell verschwenkt werden.

Diese beiden Zustände sind noch mit einem dritten Zustand ergänzbar, bei dem bei nicht bestromter elektromagnetischer Bremse durch eine Bremsscheibe aus einem dauermagnetischen Werkstoff die Klappe, wie oben beschrieben, in einer Zwischenstellung haltbar ist.

Die Bremskraft der reibschlüssigen oder formschlüssigen oder kraftschlüssigen . Bremseinrichtung kann variabel sein.

Damit kann das Bremsmoment in Abhängigkeit des Klappenöffnungswinkels und/oder der Temperatur und/oder der Fahrzeugneigung eingestellt werden.

Dabei kann eine bestimmte Bremskraft durch eine Verstellen einer Stelleinheit der Bremseinrichtung einstellbar und die Bremseinrichtung nach dem Verstellen in der eingestellten Position selbsttätig haltbar sein, wobei die Stelleinheit eine von einem Elektromotor drehbar antreibbare Spindel aufweisen kann, die in eine die Bremseinrichtung einstellende drehfeste Mutter eingreift und bei unbestromtem Elektromotor Spindel und Mutter in ihrer eingestellte Position haltbar sind.

Ausführungsbeispiele der Erfindung sind der Zeichnung dargestellt und werden im folgenden näher beschrieben. Es zeigen
- Figur 1: eine Querschnittsansicht eines ersten Ausführungsbeispiels eines Antriebes
- Figur 2: eine Querschnittsansicht eines zweiten Ausführungsbeispiels eines Antriebes
- Figur 3: eine Querschnittsansicht eines dritten Ausführungsbeispiels eines Antriebes.

Die in den Figuren dargestellten Antriebe weisen einen selbsthemmenden Elektromotor 1 auf, auf dessen Abtriebswelle ein Sonnenrad 3 eines Planetengetriebes 4 fest angeordnet ist. Das Sonnenrad ist konzentrisch von einem Innenzahnkranz 5 des Planetengetriebes 4 mit radialem Abstand umschlossen.

Ein zwischen Sonnenrad 3 und Innenzahnkranz 5 angeordnetes Planetenrad 6 greift sowohl in die Zähne des Sonnenrades 3 als auch in die Zähne des Innenzahnkranzes 5 ein.

Das Planetenrad 6 ist drehbar auf einem Achszapfen 7 eines Planetenträgers 8 gelagert, der mit einer zur Abtriebswelle 2 des Elektromotors 1 koaxialen Welle 9 fest verbunden ist, die ein Abtriebszahnrad 10 zum Schwenkantrieb einer nicht dargestellten Klappe, insbesondere einer um eine horizontale Schwenkachse schwenkbar angeordneten Heckklappe eines Fahrzeugs trägt.

Der Innenzahnkranz 5 ist durch eine Bremseinrichtung 11, 11', 11" bremsbar.

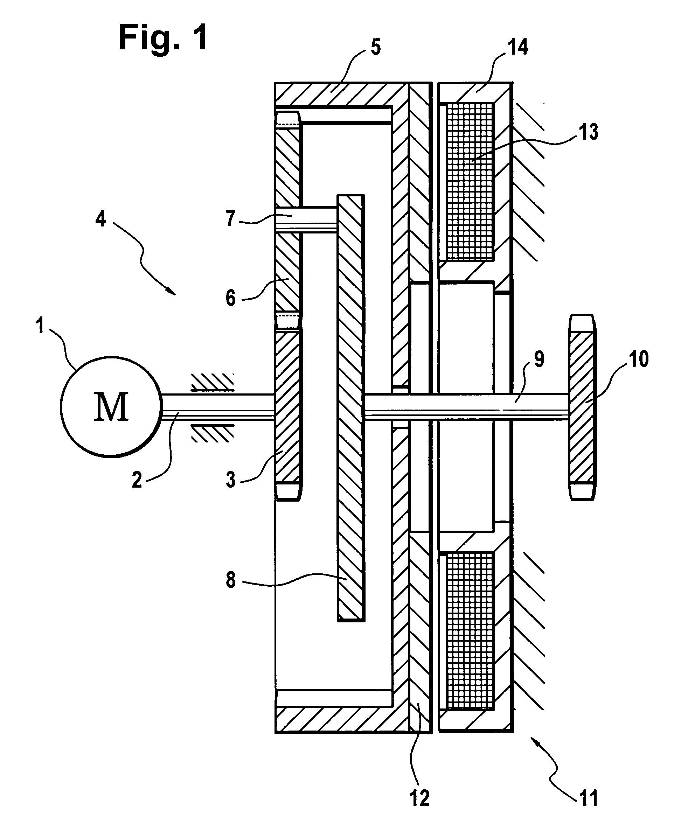

In Figur 1 ist an dem Innenzahnkranz 5 koaxial ein als Bremsscheibe dienender Bremsring 12 aus einem dauermagnetischen Material fest angeordnet.

Konzentrisch zu dem Bremsring 12 befindet sich dicht neben diesem eine Ringspule 13 der als elektromagnetische Bremse ausgebildeten Bremseinrichtung 11, bei deren Bestromung in eine erste Stromrichtung ein den Bremsring 12 an ein die Ringspule 13 umgebendes ferromagnetisches Ringgehäuse 14 anziehendes Magnetfeld erzeugt wird und eine Drehbewegung des Innenzahnkranzes 5 durch Reibschluß zwischen dem Innenzahnkranz und dem Ringgehäuse 14 blockiert.

Bei einer Bestromung in eine zweite Stromrichtung, die entgegengesetzt zur ersten Stromrichtung ist, wird ein Magnetfeld erzeugt, das den Bremsring 12 abstößt, so daß die Bremseinrichtung 11 von dem Innenzahnkranz 5 entkoppelt ist und damit der Innenzahnkranz 5 frei drehbar ist.

Wird die Ringspule 13 nicht bestromt, ist der Bremsring 12 aufgrund seiner dauermagnetischen Eigenschaft in Anlage an das Ringgehäuse 14 gezogen.

Die dabei vorhandene Reibkraft zwischen Bremsring 12 und Ringgehäuse 14 ist aber durch manuelle Schwenkbeaufschlagung der Klappe und die dadurch bewirkte Drehbewegung des Innenzahnkranzes 5 überwindbar.

Das Ringgehäuse 14 ist an seiner zum Bremsring 12 gerichteten Seite offen. Diese Bremseinrichtung 11 besitzt einen kompakten Aufbau und ist integral mit dem Antrieb aufgebaut.

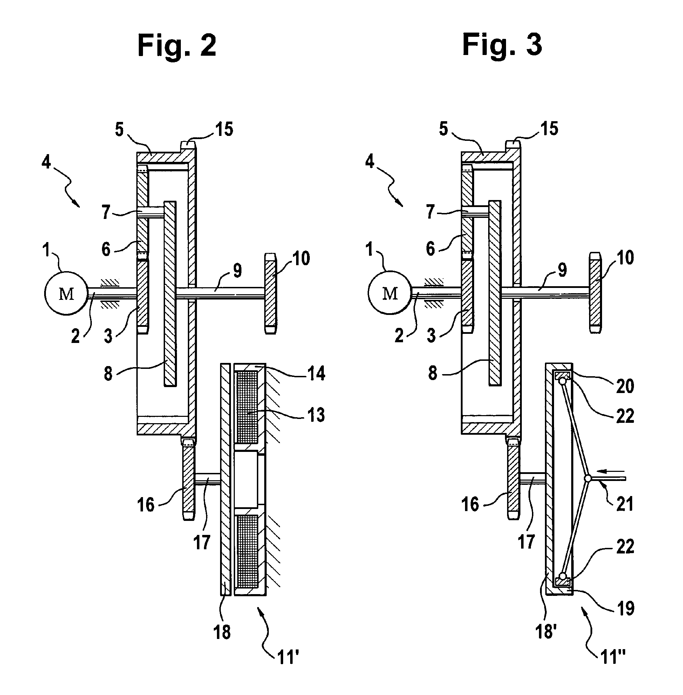

Bei dem Ausführungsbeispiel der Figuren 2 und 3 besitzt der Innenzahnkranz 5 an seiner radial umlaufenden Mantelfläche einen Zahnring 15, über den ein Ritzel 16 drehbar antreibbar ist, mit dem eine Welle 17 fest verbunden ist, die eine Bremsscheibe 18, 18' trägt.

Bei dem Ausführungsbeispiel der Figur 2 besteht die Bremsscheibe 18 aus einem ferrromagnetischen Material.

Der Bremsscheibe 18 mit geringem Abstand koaxial gegenüberliegend ist eine entsprechend Figur 1 in einem drehfesten Ringgehäuse 14 angeordnete Ringspule 13 angeordnet, bei deren Bestromung entsprechend der ersten Stromrichtung in Figur 1 ein die Bremsscheibe 18 an das Ringgehäuse 14 anziehendes Magnetfeld zum Blockieren der Drehbewegung des Ritzels 16 und damit auch das Innenzahnkranzes 5 erzeugt wird, in den das Ritzel 16 eingreift.

Bei dem Ausführungsbeispiel der Figur 3 besitzt die Bremsscheibe '18' eine daran fest angeordnete Bremstrommel 19, in deren Innenbereich radial nach außen gegen den Innenring 20 der Bremstrommel 18 durch eine Bremsmechanik 21 beaufschlagbare Bremsbacken 22 angeordnet sind. Dadurch ist eine Drehbewegung des Ritzels 16 und damit auch des Innenzahnkranzes 5 blockierbar.

### Bezunszeichenliste

- 1: Elektromotor
- 2: Abtriebswelle
- 3: Sonnenrad
- 4: Planetengetriebe
- 5: Innenzahnkranz
- 6: Planetenrad
- 7: Achszapfen
- 8: Planetenträger
- 9: Welle
- 10: Abtriebszahnrad
- 11: Bremseinrichtung
- 11': Bremseinrichtung
- 11": Bremseinrichtung
- 12: Bremsring
- 13: Ringspule
- 14: Ringgehäuse
- 15: Zahnring
- 16: Ritzel
- 17: Welle
- 18: Bremsscheibe
- 18': Bremsscheibe
- 19: Bremstrommel
- 20: Innenring
- 21: Bremsmechanik
- 22: Bremsbacken

## Patentansprüche

1. Antrieb zum Verschwenken einer an einer Karosserie eines Fahrzeugs angeordneten Klappe um eine Schwenkachse, mit einem Antriebsmotor, durch den über einen ein Planetengetriebe aufweisenden Antriebsstrang die Klappe schwenkbar antreibender Abtrieb drehbar antreibbar ist, wobei das Planetengetriebe ein Sonnenrad, einen Innenzahnkranz, ein oder mehrere mit dem Sonnenrad und dem Innenzahnkranz in Eingriff stehende Planetenräder und einen die Planetenräder tragenden Planetenträger aufirveist, der drehfest mit einer zur Drehachse des Planetenträgers koaxialen Welle verbunden ist, mit einer Bremseinrichtung, durch die die Drehbewegung einer Komponente des Planetengetriebes bremsbar ist, **dadurch gekennzeichnet, daß** durch die Bremseinrichtung (11, 11', 11") eine Komponente des Planetengetriebes, insbesondere der Innenzahnkranz (5) festsetzbar ist und daß von dem Antriebsmotor das Sonnenrad (3) oder der Planetenträger (8) oder der Innenzahnkranz (5) drehbar antreibbar ist und daß die Welle (9) des Planetenträgers (8) oder das Sonnenrad (3) oder der Innenzahnkranz (5) den Abtrieb bildet.

2. Antrieb nach Anspruch 1, **dadurch gekennzeichnet, daß** sich die Schwenkachse horizontal erstreckt.

3. Antrieb nach einem der vorhergehenden Ansprüche, **dadurch gekennzeichnet, daß** auf der Welle (9) ein Abtriebszahnrad (10) angeordnet ist, von dem die Klappe schwenkbar antreibbar ist.

4. Antrieb nach einem der vorhergehenden Ansprüche, **dadurch gekennzeichnet, daß** die Klappe über eine Getriebestufe von der Welle schwenkbar antreibbar ist.

5. Antrieb nach einem der vorhergehenden Ansprüche, **dadurch gekennzeichnet, daß** der Antriebsmotor ein Elektromotor (1), insbesondere ein Gleichstrommotor ist.

6. Antrieb nach Anspruch 5, **dadurch gekennzeichnet, daß** der Elektromotor ein Elektrogetriebemotor ist.

7. Antrieb nach einem der vorhergehenden Ansprüche, **dadurch gekennzeichnet, daß** durch den nicht angetriebenen Antriebsmotor eine Zwischenposition der Klappe selbsthemmend haltbar ist.

8. Antrieb nach einem der vorhergehenden Ansprüche, **dadurch gekennzeichnet, daß**dieBremseinrichtung(11, 11', 11") in Eingriff. mit einer Bremsscheibe (12, 18, 18') bringbar ist, wobei die Bremsscheibe (12) fest mit dem Innenzahnkranz (5) oder der Welle (9) oder mit dem Sonnenrad (3) verbunden oder an einem von dem Innenzahnkranz (5) oder der Welle (9) oder mit dem Sonnenrad (3) drehbar antreibbaren Bauteil angeordnet ist.

9. Antrieb nach einem der vorhergehenden Ansprüche, **dadurch gekennzeichnet, daß** die Bremseinrichtung eine formschlüssige Bremseinrichtung ist.

10. Antrieb nach einem der Ansprüche 1 bis 8, **dadurch gekennzeichnet, daß** die Bremseinrichtung (11, 11', 11") eine reibschlüssige Bremseinrichtung ist.

11. Antrieb nach Anspruch 10, **dadurch gekennzeichnet, daß** die Bremseinrichtung (11 ") eine Bandbremse oder eine Scheibenbremse oder eine Trommelbremse ist.

12. Antrieb nach einem der Ansprüche 1 bis 8, **dadurch gekennzeichnet, daß** die Bremseinrichtung eine kraftschlüssige Bremseinrichtung ist.

13. Antrieb nach einem der vorhergehenden Ansprüche, **dadurch gekennzeichnet, daß** die Bremseinrichtung (11,11') eine feststehende elektromagnetische Bremse ist, die mit ihrem Magnetfeld auf die aus einem ferromagnetischen Material bestehende Bremsscheibe (12, 18) wirkt.

14. Antrieb nach einem der vorhergehenden Ansprüche, **dadurch gekennzeichnet, daß** die Bremseinrichtung, insbesondere die elektromagnetische Bremse in Abhängigkeit von einem Ausgangssignal eines eine Bewegung der Klappe erfassenden Bewegungssensors ansteuerbar ist.

15. Antrieb nach einem der Ansprüche 13 und 14, **dadurch gekennzeichnet, daß** das Magnetfeld der elektromagnetischen Bremse axial zur Drehachse der Bremsscheibe gerichtet ist.

16. Antrieb nach Anspruch 15, **dadurch gekennzeichnet, daß** die Bremsscheibe (12) aus einem dauermagnetischen Werkstoff besteht, in dessen Magnetfeld ein axial zur Drehachse gegenüberliegendes, feststehendes ferromagnetisches Bauteil angeordnet ist.

17. Antrieb nach einem der Ansprüche 13 bis 16, **dadurch gekennzeichnet, daß** die Spule (13) der elektromagnetischen Bremse ein die Bremsscheibe (12, 18) anziehendes und/oder abstoßendes Magnetfeld erzeugbar bestrombar ist.

18. Antrieb nach einem der Ansprüche 10 und 11, **dadurch gekennzeichnet, daß** die Bremskraft der reibschlüssigen oder formschlüssigen oder kraftschlüssigen Bremse variabel ist.

19. Antrieb nach Anspruch 18, **dadurch gekennzeichnet, daß** eine bestimmte Bremskraft durch eine Verstellen einer Stelleinheit der Bremseinrichtung einstellbar und die Bremseinrichtung nach dem Verstellen in der eingestellten Position selbsttätig haltbar ist.

20. Antrieb nach Anspruch 19, **dadurch gekennzeichnet, daß** die Stelleinheit eine von einem Elektromotor drehbar antreibbare Spindel aufweist, die in eine die Bremseinrichtung einstellende drehfeste Mutter eingreift, wobei bei unbestromtem Elektromotor Spindel und Mutter in ihrer eingestellte Position haltbar sind.
